**Europäisches Patentamt**

**European Patent Office**

**Office européen des brevets**

(19)

(11) Veröffentlichungsnummer : **0 108 414**
**B1**

(12)                          EUROPÄISCHE PATENTSCHRIFT

(45) Veröffentlichungstag der Patentschrift :
07.09.88

(51) Int. Cl.⁴ : **G 06 F 11/22**

(21) Anmeldenummer : 83111099.4

(22) Anmeldetag : 07.11.83

(54) Vorrichtung zum Testen eines hochintegrierten mikroprogrammgesteuerten elektronischen Bauteiles.

(30) Priorität : 09.11.82 DE 3241412

(43) Veröffentlichungstag der Anmeldung :
16.05.84 Patentblatt 84/20

(45) Bekanntmachung des Hinweises auf die Patenterteilung : 07.09.88 Patentblatt 88/36

(84) Benannte Vertragsstaaten :
AT DE FR GB IT

(56) Entgegenhaltungen :
DE-A- 2 855 004
IEEE JOURNAL OF SOLID-STATE CIRCUITS, Band
SC-16, Nr. 5, Oktober 1981, Seiten 537-542, New York,
US; J.W. BEYERS et al.: "A 32-bit VLSI CPU chip"
Elektronik, Franzis-Verlag München, 1981, Heft 13,
Seiten 75-77

(73) Patentinhaber : Siemens Aktiengesellschaft Berlin
und München
Wittelsbacherplatz 2
D-8000 München 2 (DE)

(72) Erfinder : Stadlmeier, Hans, Dipl.-Ing.
Aichacher Strasse 2
D-8000 München 70 (DE)
Erfinder : Schönberger, Franz, Dipl.-Ing.
Grasmückenweg 23
D-8000 München 45 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft eine Vorrichtung zum Testen eines hochintegrierten mikroprogrammgesteuerten elektronischen Bauteiles mit einem Sequenzer zur Mikroprogramm-Folgeadreß-Bildung nach dem Oberbegriff des Anspruchs 1.

Je komplexer eine bestimmte Einrichtung wird, umso dringender stellt sich das Problem der Testbarkeit, d.h. zunächst der Aussage, ob diese Einrichtung ihre Aufgabe erfüllt oder nicht. Dies betrifft ganz besonders integrierte Schaltkreise, bei denen aufgrund der Vielzahl von Schaltelementen und der möglichen Zustands- und damit auch Fehlerkombinationen einerseits und der Unmöglichkeit andererseits, eine Fehlerkorrektur an einer einzelnen Einrichtung vornehmen zu können, sowie aufgrund der Tatsache der hohen Fertigungsstückzahlen schließlich das Testproblem eng mit der Frage der Wirtschaftlichkeit verknüpft ist.

Aus der Druckschrift Elektronik, Franzis-Verlag München, 1981, Heft 13, Seite 75 bis 77 ist ein variables Testkonzept für Mikroprozessorsysteme bekannt, bei welchem ein auf dem Chip integrierter Testprozessor Makrobefehlsregister, Schieberegister, MUX und Pipelineregister des mikroprogrammierten Steuerwerkes und sich selbst testet. Bei Einprozessorsystemen übernimmt der Testprozessor dabei die Steuerung des gesamten Systems, ohne daß eine externe Beeinflussung möglich ist.

Bei Mehrprozessorsystemen muß einer der Testprozessoren als Serviceprozessor ausgelegt werden und mit den restlichen Testprozessoren über ein zusätzlich zu installierendes Kommunikationsnetz verbunden werden.

Der vorliegenden Erfindung liegt die Aufgabe zugrunde, eine Vorrichtung der eingangs genannten Art anzugeben, mit der es möglich ist, die Mikroprogramm-Steuerung auf ihre Funktion hin zu überprüfen bzw. sonstige Parameter kontrollieren zu können.

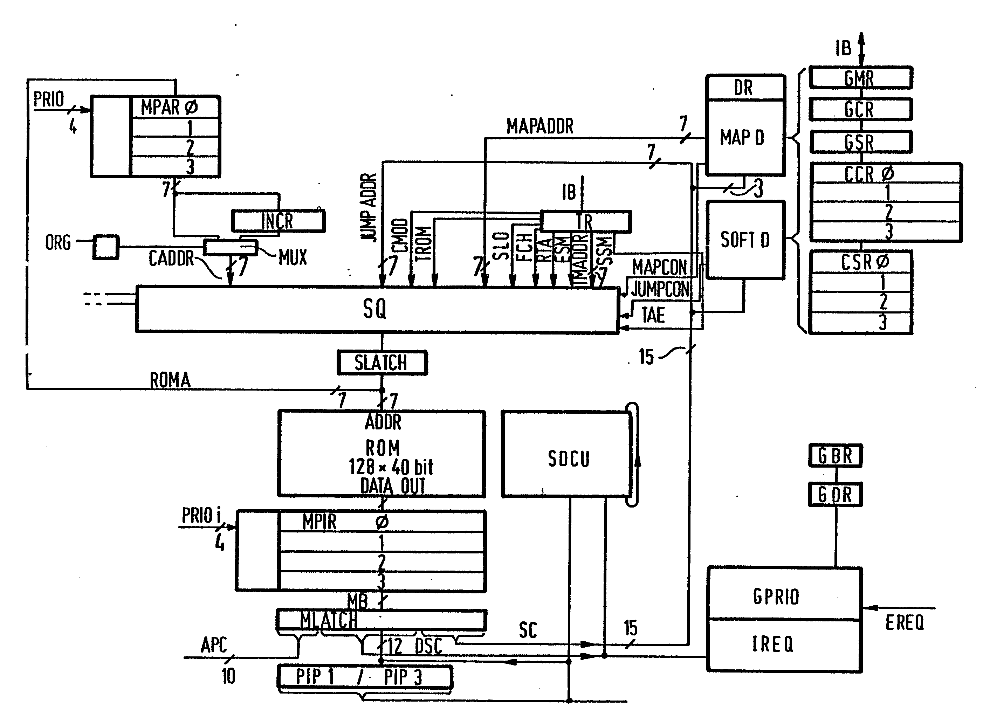

Diese Aufgabe wird erfindungsgemäß durch eine Vorrichtung nach dem Anspruch 1 gelöst. Ausgestaltungen und Vorteile der Erfindung sind in den Unteransprüchen, der Beschreibung und der Zeichnung dargestellt.

Die Erfindung ermöglicht auf extrem einfache und rasche Weise, Zugriff zu bestimmten Funktionseinheiten eines elektronischen Bauteiles zu haben, diese Funktionseinheiten in bestimmte Zustände bringen zu können, die Zustandsänderungen leicht beobachten zu können, möglichst viele relevante Zustandsänderungen in möglichst kurzer Zeit herbeiführen zu können (dies ist besonders wichtig bei Fertigungstests,) Testmöglichkeiten nicht nur für die Fertigung, sondern auch für den Einsatz im System (ICE !) zu bieten.

Hervorzuheben sind also besonders drei Vorteile der Erfindung :

Die einfache Einstellung des Testmodus, die Vielzahl der Testmöglichkeiten, die rasche Aussage über die Funktionsfähigkeit.

Die Erfindung wird im folgenden anhand eines Ausführungsbeispiels näher beschrieben.

Die Figur zeigt ein Blockschaltbild eines Ausführungsbeispiels der Erfindung.

Der integrierte Hochleistungs-DMA-Kontroller ADMA (advanced direct memory access) beispielsweise besitzt vier voneinander unabhängige Kanäle, die den Datentransfer zwischen Medien (Peripherie-Geräte, Speicher) oder allgemeiner gesprochen zwischen Datenquelle und Datensenke bewerkstelligen. Die Hauptsteuerung der Kanäle übernehmen Mikroprogramme, deren Befehlsfolge von einem Sequenzer SQ gesteuert wird.

Im ADMA ist ein Testregister TR realisiert, das wie jedes andre ADMA-Register auch von der bedienenden Zentraleinheit (CPU) bzw. von der bedienenden Testeinrichtung beschrieben werden kann. Dieses Testregister TR kommt sowohl für Fertigungstests als auch für Systemeinsätze (wie ICE) in Frage und realisiert folgende Funktionen :

Mittels eines Bits TAE (« test adress enable ») kann eine gleichfalls im Testregister TR stehende Mikrobefehlsadresse TMADDR an den Sequenzer SQ angelegt werden. Damit besteht die Möglichkeit, beliebige Mikrobefehle MB bzw. Mikroprogramm-Einsprünge auszuwählen und schließlich auszuführen.

Ein Bit SSM (« single step mode ») sorgt für die Einzelausführung eines Mikrobefehls MB, d.h. nach jedem Mikrobefehl MB stoppt dabei der ADMA. Der interne Zustand des ADMA kann dann durch die Zentraleinheit (CPU) oder durch eine Testeinrichtung durch Lesen der internen Register überprüft werden.

Ein Bit ESM (« error stop mode ») bietet die Möglichkeit, bei Auftritt eines internen Fehlerereignisses in einem Kanal entweder nur diesen Kanal zu stoppen oder aber sämtliche Kanäle zu stoppen.

Ein Bit CMOD (« cyclic mode ») bietet die Möglichkeit, einen bestimmten, gerade anstehenden oder vorher mittels TAE und TMADDR ausgewählten Mikrobefehl MB zyklisch ausführen zu lassen. Diese Möglichkeit ist insbesondere für die Beobachtung mittels « logic state analyzer »/Oszilloskop bzw. Rasterelektronenmikroskop zur Erzielung eines stehenden Bildes interessant. Bei einem zyklisch ausgeführten Mikrobefehl MB lassen sich spannungsführende Teile des zu testenden elektronischen Bauteiles stroboskopisch sichtbar machen.

Zwei Bits TROM 0,1 (Test ROM) bieten die Möglichkeit, Teile des Inhalts (Mikrobefehle) des Mikrobefehlsspeichers ROM sequentiell auszulesen und auf den externen Bus auszugeben.

Ein Bit SLO (« SLATCH OUT ») bietet die Möglichkeit, die Ausgabe der vom Sequenzer SQ generierten Mikrobefehls-Folgeadresse ROMA auf bestimmten, im Normalbetrieb anderweitig verwendeten Pins des elektronischen Bauteiles auszugeben. Damit ist die externe Kontrolle der Sequenzerfunktion und damit die Mikrobefehls-Folgeadreßbildung bei Abarbeitung von Mikrobefehlen möglich.

Ein Bit FCH (« fixed channel number ») bietet die Möglichkeit, die ADMA-Aktivität auf einen einzigen, durch zwei weitere Bits CH (« channel number ») definierten Kanal einzuschränken.

Ein Bit RTA (« register test access ») bietet zu Testzwecken den Zugriff auf sonst schreibgesicherte Register des ADMA.

Damit sind erstmals in einem hochintegrierten Baustein ohne besonderen zusätzlichen Aufwand Testfunktionen realisiert, wie sie bisher bestenfalls von Großrechnern bekannt waren.

Die internen Register des ADMA werden über einen internen Bus IB beschrieben und ausgelesen. Als interne Register stehen im ADMA im wesentlichen ein allgemeines Modus Register GMR, ein allgemeines Steuerregister GCR, vier kanalspezifische Steuerregister CCR, ein allgemeines Statusregister GSR, vier kanalspezifische Statusregister CSR, ein allgemeines « burst »-Register GBR, ein allgemeines Verzögerungsregister GDR und das bereits besprochene Testregister TR zur Verfügung.

An den Sequenzer SQ können vier verschiedene Arten von Mikrobefehlsadressen angelegt werden : Eine « continue »-Adresse CADDR, eine Sprungadresse JUMPADDR, eine Mapadresse MAPADDR und eine Testadresse TMADDR. Ist das Bit TAE gesetzt, so wird die anliegendeTestadresse TMADDR mit höchster Priorität ausgewählt. Ist das Signal MAPCON aktiviert und das Bit TAE nicht gesetzt, so wird die anliegende Mapadresse MAPADDR mit höchster Priorität ausgewählt. Ist das Signal MAPCON nicht aktiviert und ebenso das Bit TAE nicht gesetzt, ist jedoch andererseits das Signal JUMPCON aktiviert, so wird eine anliegende Sprungadresse JUMPADDR mit höchster Priorität ausgewählt. Ist sowohl das Signal MAPCON als auch das Signal JUMPCON nicht aktiviert und ist ebenfalls das Bit TAE nicht gesetzt, so wird eine anliegende « continue »-Adresse CADDR ausgewählt. Die vom Sequenzer SQ ausgewählte aktuelle Mikroadresse ROMA wird in einem Zwischenspeicher SLATCH zwischengespeichert. Diese aktuelle Mikrobefehlsadresse ROMA liest aus dem Mikrobefehlsspeicher ROM den zugehörigen Mikrobefehl MB aus. Dieser zugehörige Mikrobefehl MB wird in einem von der Priorisierungseinheit GPRIO selektierten Mikroinstruktionsregister MPRi, i = 0, 1, 2, 3, gespeichert und sodann zusätzlich in einem Zwischenspeicher MLATCH zwischengespeichert. Die Priorisierungseinheit GPRISO selektiert einen der vier Kanäle des ADMA aufgrund von äußeren Anforderungen EREQ, aufgrund von internen Anforderungen IREQ und aufgrund von Informationen, die in internen Registern enthalten sind. Die Priorisierungseinheit GPRIO steuert den selektierten Kanal über eine Leitung PRIOi an.

Die aktuelle Mikrobefehlsadresse ROMA wird in einem kanalspezifischen Mikroprogramm-Adreßregister MPARi, i = 0, 1, 2, 3, des selektierten Kanals gespeichert. Die aktuelle Mikrobefehlsadresse wird in einem Inkrementer INCR inkrementiert. Gehört die aktuelle Mikrobefehlsadresse ROMA zu einem sogenannten Organisations-Mikrobefehl, so wird über ein bei einem Organisations-Mikrobefehl gesetztes Bit ORG mittels eines Multiplexers MUX für die folgende « continue »-Adresse CADDR die inkrementierte aktuelle Mikrobefehlsadresse ROMA ausgewählt. Gehört die aktuelle Mikrobefehlsadresse ROMA zu einem DMA-Transfer-Mikrobefehl, so wird mittels des Multiplexers MUX die unveränderte aktuelle Mikrobefehlsadresse ROMA ausgewählt.

Der im Zwischenspeicher MLATCH enthaltene Mikrobefehl MB enthält ein Feld SC zur Sequenzersteuerung. Dieses Feld SC liefert Testbedingungen, die in einem Softdecodierer SOFTD und in einem Mapdecodierer MAPD auf ihre aktuelle Gültigkeit hin anhand der internen Register überprüft werden. Bei Gültigkeit der in dem Feld SC enthaltenen Testbedingungen werden die Signale MAPCON bzw. JUMPCON aktiviert. Der Mikrobefehl MB enthält weiterhin ein Feld DSC zur Datensteuerung in Zusammenarbeit mit einer Datensteuereinheit SDCU. Der Mikrobefehl MB enthält weiterhin ein Feld APC zur Adreßpointer-Steuerung. Die Mikrobefehle verschiedener Kanäle werden hintereinander in einer Pipeline-Vorrichtung PIP1/PIP3 behandelt.

Die Testadresse TMADDR und das Bit TAE bilden ein wichtiges Feature zum Inbetriebnahme-Test des elektronischen Bauteiles ebenso wie für Serien-Tests ; sie gewährleisten die Beobachtbarkeit des Verhaltens des elektronischen Bauteiles nach einer von außen vorgegebenen Mikroinstruktions-Sequenz. Damit können gezielte Einsprünge in Test-Mikroprogramm-Routinen einfach realisiert werden. Diese Test-Mikroprogramme können von Kanalprogrammen her nicht angesprungen werden. Diese Test-Mikroprogramme werden auf freie Speicherplätze des internen Mikrobefelsspeichers ROM verlegt.

Das Bit SSM und das Bit CMOD können ebenfalls sowohl für Inbetriebnahme-Tests des elektronischen Bauteiles als auch zusammen mit dem Feature « Einschleusen einer Test-Mikroadresse » (TMADDR zusammen mit TAE) für Diagnose-Zwecke ein wertvolles Hilfsmittel darstellen. Beispielsweise können Mikroinstruktionen innerhalb des Mikrobefehlsspeichers ROM, welche die aktive Ausgabe von Statusinformationen veranlassen, selektiv angesprungen werden.

Das Ausgeben eines Mikrobefehls auf den externen Bus mittels der zwei Bits TROM 0,1 geschieht vorteilhafterweise stückweise nach Aufteilen des Mikrobefehls in mehrere Teile und vorzugsweise zu Testzwecken. Mit zwei Bits TROM 0,1 hat man vier Kombinationsmöglichkeiten dieser zwei Bits, und zwar eine Kombinationsmöglichkeit für die O-Codierung und drei Kombinationsmöglichkeiten zum Auslesen von drei Teilen eines in drei Teile zerlegten Mikrobefehls.

Die Figur zeigt ein Diagnose-Register DR. Dieses Diagnose-Register DR dient der Ablaufkontrole als « trace feature » und der Fehlerdiagnose. Dieses Diagnose-Register DR ist ein getaktetes Register und ist nur lesbar. Während der Dauer eines jeden Stop-Mikrobefehls wird der Takt unterbunden. Dieses Diagnose-Register DR enthält die Adresse des gerade abgelaufenen Mikrobefehls. Diese gerade abgelaufene Mikrobefehl ist im Fehlerfall der Verursacher des Fehlers. Weiter enthält das Diagnose-Register DR die Folgeadresse, also die Adresse des auf den abgelaufenen Mikrobefehl folgenden Mikrobefehls bzw. den Fehlercode, falls ein Fehler aufgetreten ist.

Ebenfalls im Diagnose-Register enthalten ist ein Feld mit zwei Bits für ein Prioritätssignal PRIO. Dieses Prioritätssignal PRIO definiert bei Auftreten eines Fehlers eindeutig denjenigen Kanal, in dem dieser Fehler aufgetreten ist.

Tritt in einem Kanal ein Fehler auf, so werden abhängig vom Fehlerstop-Modus entweder nur der fehlerhafte Kanal oder alle Kanäle gleichzeitig gestoppt. Da für alle Kanäle gemeinsam nur ein einziges Diagnose-Register DR vorhanden ist, würde der Inhalt des Diagnose-Registers DR überschrieben werden, wenn bei Auftreten eines Fehlers in einem Kanal nicht gleichzeitig alle Kanäle gestoppt werden, sondern ein anderer Kanal weiter agiert. Dies muß beim Erstellen des Mikroprogrammes berücksichtigt werden.

Bei Auftreten eines Fehlers in einem Kanal wird durch Sperren des Zwischenspeichers für das Feld von zwei Bits für die Priorität PRIO innerhalb des Diagnose-Registers DR die gerade aktuelle Priorität PRIO für eine Mikrobefehl festgehalten. Dies stellt sicher, daß nach einem fehlerhaften Mikrobefehl, der einen bestimmten Kanal betrifft, ein daraufhin angesprungener Stop-Mikrobefehl auf demselben Kanal abläuft. Dem Diagnose-Register DR können also die Adresse des gerade abgelaufenen Mikrobefehls, die Folgeadresse des folgenden Mikrobefehls bzw. der Fehlercode und die Angabe des fehlerhaften Kanals entnommen werden.

**Patentansprüche**

1. Vorrichtung zum Testen eines mit einem Sequenzer (SQ) zur Mikroprogramm-Folgeadreß-Bildung ausgestatteten, hochintegrierten mikroprogrammgesteuerten elektronischen Bauteils, gekennzeichnet durch ein innerhalb des elektronischen Bauteils realisierten Testregisters (TR), das über Signalleitungen mit dem Sequenzer (SQ) verbunden und von einer Zentraleinheit (CPU) oder einer äußeren Testeinrichtung beschreibbar ist und das zur Teststeuerung ihm zugehörige Steuersignale (TAE) und Testadressen (TMADDR) an den Sequenzer (SQ) anlegt.

2. Vorrichtung nach der Anspruch 1, gekennzeichnet durch zum Testregister (TR) zugehörige Steuersignale (SSM), zur Einzelausführung eines Mikrobefehls.

3. Vorrichtung nach einem der Ansprüche 1 oder 2, gekennzeichnet durch zum Testregister (TR) zugehörige Steuersignale (ESM), zum Stoppen einer Funktionseinheit bei Auftritt eines internen Fehlerereignisses.

4. Vorrichtung nach einem der Ansprüche 1 bis 3, gekennzeichnet durch zum Testregister (TR) zugehörige Steuersignale (CMOD), zur zyklischen Ausführung eines bestimmten Mikrobefehls.

5. Vorrichtung nach einem der Ansprüche 1 bis 4, gekennzeichnet durch Steuersignale (TROM 0,1) zum Auslesen von Mikrobefehlen aus einem Mikrobefehlsspeicher (ROM) und zu deren Ausgabe auf einen externen Bus.

6. Vorrichtung nach einem der Ansprüche 1 bis 5, gekennzeichnet durch Steuersignale (SLO) zur Ausgabe der vom Sequenzer (SQ) erzeugten Mikroprogramm-Folgeadresse (ROMA) auf bestimmten Pins des elektronischen Bauteiles.

7. Vorrichtung nach einem der Ansprüche 1 bis 6, gekennzeichnet durch Steuersignale (FCH) zur Ausschaltung der Aktivität des elektronischen Bauteiles für bestimmte Funktionseinheiten.

8. Vorrichtung nach einem der Ansprüche 1 bis 7, gekennzeichnet durch Steuersignale (RTA) zum Zugriff auf ein ansonsten schreibgesichertes Register.

9. Vorrichtung nach einem der Ansprüche 1 bis 8, gekennzeichnet durch Steuersignale (DR) zur Angabe eines Fehler-Codes.

**Claims**

1. A device for testing a highly-integrated, micro-programme-controlled electronic component which is equipped with a sequencer (SQ) for the micro-programme sequence address formation, characterised by a test register (TR) which is comprised within the electronic component and which is connected via signal lines to the sequencer (SQ) and in which recordings can be made by a central unit (CPU) or an external test device, and which, for test control purposes, supplies assigned control signals (TAE) and test address (TMADDR) to the sequencer (SQ).

2. A device as claimed in claim 1, characterised by control signals (SSM), assigned to the test register (TR), for the individual execution of a micro-command.

3. A device as claimed in claim 1 or claim 2, characterised by control signals (ESM), assigned to the test register (TR), for stopping a function unit on the occurrence of an internal fault phenomenon.

4. A device as claimed in one of the claims 1 to 3, characterised by control signals (CMOD), assigned to the test register (TR), for the cyclic execution of a specific micro-command.

5. A device as claimed in one of the claims 1 to 4, characterised by control signals (TROM 0,1) for reading-out micro-commands from a micro-command store (ROM) and for their output to an external bus.

6. A device as claimed in one of the claims 1 to 5, characterised by control signals (SLO) for the output of the micro-programme sequence address (ROMA), generated by the sequencer (SQ) for specific pins of the electronic component.

7. A device as claimed in one of the claims 1 to

6, characterised by control signals (FCH) for disconnecting the activity of the electronic component for specific function units.

8. A device as claimed in one of the claims 1 to 7, characterised by control signals (RTA) for access to a register which otherwise has recording protection.

9. A device as claimed in one of the claims 1 to 8, characterised by control signals (DR) which indicate a fault code.

**Revendications**

1. Dispositif pour tester un composant électronique à haute intégration, commandé par microprogramme et muni d'un séquenceur (SQ) pour la formation de l'adresse de chaînage du microprogramme, caractérisé par un registre d'essai (TR), réalisé à l'intérieur du composant électronique, qui est relié par des lignes de transfert de signaux au séquenceur (SQ) et peut être inscrit par une unité centrale (CPU) ou par un dispositif d'essai externe et qui applique au séquenceur (SQ), en vue de la commande de l'essai, des signaux de commande (TAE) et des adresses d'essai (TMADDR) qui lui sont associés.

2. Dispositif selon la revendication 1, caractérisé par des signaux de commande (SSM) associés au registre d'essai (TR) pour l'exécution individuelle d'une micro-instruction.

3. Dispositif selon la revendication 1 ou 2, caractérisé par des signaux de commande (ESM) associés au registre d'essai (TR) pour arrêter une unité fonctionnelle en cas d'apparition d'une erreur interne.

4. Dispositif selon une des revendications 1 à 3, caractérisé par des signaux de commande (CMOD) associés au registre d'essai (TR) pour l'exécution cyclique d'une micro-instruction déterminée.

5. Dispositif selon une des revendications 1 à 4, caractérisé par des signaux de commande (TROM 0,1) pour la lecture de micro-instructions d'une mémoire de micro-instructions (ROM) et pour leur délivrance sur un bus externe.

6. Dispositif selon une des revendications 1 à 5, caractérisé par des signaux de commande (SLO) pour la délivrance de l'adresse de chaînage de microprogramme (ROMA), calculée par le séquenceur (SQ), sur des broches déterminées du composant électronique.

7. Dispositif selon une des revendications 1 à 6, caractérisé par des signaux de commande (FCH) servant à supprimer l'activité de certaines unités fonctionnelles du composant électronique.

8. Dispositif selon une des revendications 1 à 7, caractérisé par des signaux de commande (RTA) pour accéder à un registre dont l'écriture est normalement protégée.

9. Dispositif selon une des revendications 1 à 8, caractérisé par des signaux de commande (DR) pour l'indication d'un code d'erreurs.

GMR GCR GSR CCR CSR
DR MAP D SOFT D
GBR GDR
GPRIO IREQ
EREQ
IB
MAPADDR
MAPCON JUMPCON TAE
TR SSM IMADDR FSM RIA FCH SLO
IB
CMOD TROM
JUMP ADDR
SQ
SDCU
SLATCH
ADDR ROM 128 × 40 bit DATA OUT
MPIR
MB
MLATCH
DSC
PIP 1 PIP 3
SC
APC
PRIO i
ROMA
MPAR
INCR
MUX
CADDR
ORG
PRIO